# EUROPEAN PATENT APPLICATION

(11) **EP 4 807 451 A1**
(43) Date of publication of application: **16.09.2026**
(21) Application number: 25225560.9
(22) Date of filing: 19.12.2025
(51) Int. Cl.: G03G 15/02, G03G 15/16, G03G 15/08

(54) **ELECTROPHOTOGRAPHIC MEMBER, TRANSFER DEVICE, CHARGING DEVICE, AND IMAGE FORMING APPARATUS**

(30) Priority: 12.03.2025 JP 2025039628
(71) Applicant: FUJIFILM Business Innovation Corp., Minato-ku Tokyo (JP)
(72) Inventor: ROKUTAN, Minoru, Ebina-shi, Kanagawa (JP); ONO, Masato, Ebina-shi, Kanagawa (JP); INOUE, Sayaka, Ebina-shi, Kanagawa (JP)
(74) Representative: Becker Kurig & Partner Patentanwälte mbB

(57) **Abstract**

An electrophotographic member includes a surface layer that contains a binding material and polysiloxane compound particles, in which a content of the polysiloxane compound particles in the surface layer is 100 parts by mass or more and 250 parts by mass or less with respect to 100 parts by mass of the binding material, and an exposure rate of the polysiloxane compound particles in the surface layer is 30% or more and 75% or less.

## Description

### BACKGROUND OF THE INVENTION

### (i) Field of the Invention

The present invention relates to an electrophotographic member, a transfer device, a charging device, and an image forming apparatus.

### (ii) Description of Related Art

In an image forming apparatus (such as a copy machine, a facsimile machine, and a printer) using an electrophotographic method, a toner image formed on a surface of an image holder is transferred to a recording medium, and then fixed to form an image through charging, electrostatic latent image formation, and development.

For example, JP2014-164010A discloses "charging roller including a conductive base and a conductive surface layer, in which the conductive surface layer contains a binder resin, a conductive agent, and spiculated particles, the conductive surface layer has a protrusion derived from the spiculated particles on a surface thereof, and the binder resin consists of a resin having a polar group, and the spiculated particles have polysilsesquioxane on a surface thereof".

JP2011-145660A discloses "charging member including a support, a conductive elastic layer, and a surface layer in this order, in which the surface layer contains polysiloxane and silsesquioxane, the polysiloxane has a first unit represented by SiO_{0.5}R¹(OR²)(OR³), a second unit represented by SiO_{1.0}R⁴(OR⁵), and a third unit represented by SiO_{1.5}R⁶, and the silsesquioxane is at least one compound selected from the group consisting of specific compounds".

### SUMMARY OF THE INVENTION

An object of the present invention is to provide an electrophotographic member including a surface layer containing a binding material and polysiloxane compound particles, in which cleaning performance and crack resistance are both excellent as compared with a case where a content of the polysiloxane compound particles is less than 100 parts by mass or more than 250 parts by mass with respect to 100 parts by mass of the binding material, or a case where an exposure rate of a siloxane compound in the surface layer is less than 30% or more than 75%.

Methods for achieving the above-described object include the following aspects.
<1> According to a first aspect of the present disclosure, there is provided an electrophotographic member including:
   a surface layer that contains a binding material and polysiloxane compound particles,
   in which a content of the polysiloxane compound particles in the surface layer is 100 parts by mass or more and 250 parts by mass or less with respect to 100 parts by mass of the binding material, and
   an exposure rate of the polysiloxane compound particles in the surface layer is 30% or more and 75% or less.
<2> According to a second aspect of the present disclosure, there is provided the electrophotographic member according to <1>,
   in which the content of the polysiloxane compound particles may be 140 parts by mass or more and 220 parts by mass or less with respect to 100 parts by mass of the binding material, and
   the exposure rate of the polysiloxane compound particles in the surface layer may be 45% or more and 65% or less.
<3> According to a third aspect of the present disclosure, there is provided the electrophotographic member according to <1> or <2>,
   in which a surface of the surface layer may be a polished surface.
<4> According to a fourth aspect of the present disclosure, there is provided the electrophotographic member according to <3>,
   in which a ten-point average roughness Rz on the surface of the surface layer may be 0.1 µm or more and 5.0 µm or less.
<5> According to a fifth aspect of the present disclosure, there is provided the electrophotographic member according to any one of <1> to <4>,
   in which a volume average particle diameter of the polysiloxane compound particles may be 3 µm or less.
<6> According to a sixth aspect of the present disclosure, there is provided the electrophotographic member according to any one of <1> to <5>,
   in which the polysiloxane compound particles may be polysiloxane compound particles that have a T unit represented by a formula: [R¹SiO_{3/2}]ₘ (in the formula, R¹ represents an organic group, and m represents an integer of 2 or more), in which at least one R¹ among a plurality of R¹'s present in the T unit is a group including at least one of an alkyl group or an aryl group.
<7> According to a seventh aspect of the present disclosure, there is provided the electrophotographic member according to <6>,
   in which the group including at least one of an alkyl group or an aryl group may be a group including an alkyl group.
<8> According to an eighth aspect of the present disclosure, there is provided a transfer device including:
   a transfer member configured of the electrophotographic member according to any one of <1> to <7>.
<9> According to a ninth aspect of the present disclosure, there is provided a charging device including, as a charging member:
   a charging member configured of the electrophotographic member according to any one of <1> to <7>.
<10> According to a tenth aspect of the present disclosure, there is provided an image forming apparatus including:
   an image holder;
   a charging device that charges a surface of the image holder;
   an electrostatic latent image forming device that forms an electrostatic latent image on the charged surface of the image holder;
   a developing device that accommodates a developer containing a toner and develops the electrostatic latent image formed on the surface of the image holder with the developer to form a toner image;
   the transfer device according to <8>, that transfers the toner image onto a surface of a recording medium; and
   a fixing device that fixes the toner image on the surface of the recording medium.
<11> According to an eleventh aspect of the present disclosure, there is provided an image forming apparatus including:
   an image holder;
   the charging device according to <9>, that charges a surface of the image holder;
   an electrostatic latent image forming device that forms an electrostatic latent image on the charged surface of the image holder;
   a developing device that accommodates a developer containing a toner and develops the electrostatic latent image formed on the surface of the image holder with the developer to form a toner image;
   a transfer device that transfers the toner image onto a surface of a recording medium; and
   a fixing device that fixes the toner image on the surface of the recording medium.
<12> According to a twelfth aspect of the present disclosure, there is provided a method of manufacturing an electrophotographic member, including:
   a step of forming a polysiloxane compound particle-containing layer that contains a binding material and polysiloxane compound particles; and
   a step of polishing a surface of the polysiloxane compound particle-containing layer to form the polished polysiloxane compound particle-containing layer into a surface layer;
   in which a content of the polysiloxane compound particles in the surface layer is 100 parts by mass or more and 250 parts by mass or less with respect to 100 parts by mass of the binding material, and
   an exposure rate of the polysiloxane compound particles in the surface layer is 30% or more and 75% or less.

According to <1>, there is provided an electrophotographic member including a surface layer containing a binding material and polysiloxane compound particles, in which cleaning performance and crack resistance are both excellent as compared with a case where a content of the polysiloxane compound particles is less than 100 parts by mass or more than 250 parts by mass with respect to 100 parts by mass of the binding material, or a case where an exposure rate of a siloxane compound in the surface layer is less than 30% or more than 75%.

According to <2>, there is provided an electrophotographic member in which cleaning performance and crack resistance are both excellent as compared with a case where the content of the polysiloxane compound particles is less than 140 parts by mass or more than 200 parts by mass with respect to 100 parts by mass of the binding material, or a case where the exposure rate of the polysiloxane compound particles in the surface layer is less than 45% or more than 65%.

According to <3>, there is provided an electrophotographic member in which cleaning performance and crack resistance are both excellent as compared with a case where the surface of the surface layer is a non-polished surface.

According to <4>, there is provided an electrophotographic member in which cleaning performance and crack resistance are both excellent as compared with a case where the ten-point average roughness Rz on the surface of the surface layer is less than 0.1 µm or more than 5.0 µm.

According to <5>, there is provided an electrophotographic member in which cleaning performance and crack resistance are both excellent as compared with a case where the volume average particle diameter of the polysiloxane compound particles is more than 3 µm.

According to <6>, there is provided an electrophotographic member in which cleaning performance and crack resistance are both excellent as compared with a case where the polysiloxane compound particles of the surface layer is dimethyl silicone particles.

According to <7>, there is provided an electrophotographic member in which cleaning performance and crack resistance are both excellent as compared with a case where the group including at least one of an alkyl group or an aryl group is a group including an aryl group.

According to <8> or <10>, there is provided a transfer device including a transfer member that includes a surface layer containing a binding material and polysiloxane compound particles, in which cleaning performance and crack resistance are both excellent as compared with a case where a content of the polysiloxane compound particles is less than 100 parts by mass or more than 250 parts by mass with respect to 100 parts by mass of the binding material, or a case where an exposure rate of a siloxane compound in the surface layer is less than 30% or more than 75%; or an image forming apparatus including the transfer device.

According to <9> or <11>, there is provided a charging device including a charging member that includes a surface layer containing a binding material and polysiloxane compound particles, in which cleaning performance and crack resistance are both excellent as compared with a case where a content of the polysiloxane compound particles is less than 100 parts by mass or more than 250 parts by mass with respect to 100 parts by mass of the binding material, or a case where an exposure rate of a siloxane compound in the surface layer is less than 30% or more than 75%; or an image forming apparatus including the charging device.

### BRIEF DESCRIPTION OF THE DRAWINGS

Exemplary embodiment(s) of the present invention will be described in detail based on the following figures, wherein:
FIG. 1 is a view schematically showing a configuration of an example of the image forming apparatus according to the present exemplary embodiment; and
FIG. 2 is a view schematically showing a configuration of a vicinity of a secondary transfer unit in another example of the image forming apparatus according to the present exemplary embodiment.

### DETAILED DESCRIPTION OF THE INVENTION

Hereinafter, exemplary embodiments of the present invention will be described. The following descriptions and examples merely illustrate the exemplary embodiments, and do not limit the present invention.

Regarding the numerical ranges described in stages in the present specification, the upper limit value or lower limit value of a numerical range may be replaced with the upper limit value or lower limit value of another numerical range described in stages. In addition, in the present specification, the upper limit value or lower limit value of a numerical range may be replaced with values described in examples.

In the present specification, the term "step" includes not only an independent step but a step which is not clearly distinguished from other steps as long as the intended purpose of the step is achieved.

In the present specification, in a case where an exemplary embodiment is described with reference to drawings, the configuration of the exemplary embodiment is not limited to the configuration shown in the drawings. In addition, the sizes of members in each drawing are conceptual and do not limit the relative relationship between the sizes of the members.

In the present specification, each component may include a plurality of corresponding substances. In the present specification, in a case of referring to an amount of each component in the composition, the amount refers to a total amount of the substances that are present in the composition.

### <Electrophotographic Member>

The electrophotographic member according to the present exemplary embodiment includes a surface layer containing a binding material and polysiloxane compound particles.

A content of the polysiloxane compound particles in the surface layer is 100 parts by mass or more and 250 parts by mass or less with respect to 100 parts by mass of the binding material.

An exposure rate of the polysiloxane compound particles in the surface layer is 30% or more and 75% or less.

With the above-described configuration, the electrophotographic member according to the present exemplary embodiment has both excellent cleaning performance and crack resistance. The reason is presumed as follows.

In recent years, due to the increasing awareness of sustainable development goals (SDGs), developments of materials that reduce environmental burden have been in progress. As one of the techniques, a technique of adopting a surface layer containing a binding material and polysiloxane compound particles as a release material is known.

A surface of the surface layer containing the binding material and the polysiloxane compound particles exhibits release properties with the polysiloxane compound particles exposed from the surface of the surface layer. Therefore, in a case where an amount of the polysiloxane compound particles in the surface layer is increased, an exposure rate of the polysiloxane compound particles on the surface of the surface layer is increased, and thus the release properties are also improved. Therefore, cleaning performance is improved by the release properties.

However, in a case where the amount of the polysiloxane compound particles in the surface layer is increased, the surface layer is brittle, and cracks occur.

Therefore, in the electrophotographic member according to the present exemplary embodiment, the content of the polysiloxane compound particles is suppressed to the above-described range in order to suppress the occurrence of cracks. In addition, the exposure rate of the polysiloxane compound particles in the surface layer is increased to the above-described range. Therefore, the release properties of the surface layer are improved while suppressing the cracks of the surface layer.

From the above, it is presumed that the electrophotographic member according to the present exemplary embodiment has both excellent cleaning performance and crack resistance due to the above-described configuration.

Details of the electrophotographic member according to the present exemplary embodiment will be described.

Examples of the electrophotographic member according to the present exemplary embodiment include members having the following layer configurations.
(1) A member including a resin layer and a surface layer in this order
(2) A member including an elastic layer and a surface layer in this order
(3) A member including a metal layer and a surface layer in this order
(4) A member in which an interlayer such as a resin layer, an elastic layer, and a metal layer is further interposed between a resin layer, an elastic layer, or a metal base material, and a surface layer
(5) A member consisting of a monolayer composed of only a surface layer

### (Surface Layer)

### ((Formulation of Surface Layer))

The surface layer contains a binding material and polysiloxane compound particles. The surface layer may contain a conductive agent, other additives, and the like.

### -Polysiloxane Compound Particles-

As the polysiloxane compound particles, for example, it is preferable to apply polysiloxane compound particles having the T unit represented by the formula: [R¹SiO_{3/2}]ₘ (in the formula, R¹ represents an organic group, m represents an integer of 2 or more, and at least one R¹ among a plurality of R¹'s present in the T unit is a group including at least one of an alkyl group or an aryl group).

By applying the polysiloxane compound particles, the release properties of the surface layer are improved. As a result, the cleaning performance is improved.

The polysiloxane compound particles may be a polysiloxane compound having a D unit represented by a formula: (R²R³SiO_{2/2})ₙ (in the formula, R² and R³ are organic groups, and n is an integer of 2 or more), together with the T unit represented by the formula: [R¹SiO_{3/2}]ₘ.

For example, it is preferable that at least one of R² or R³ among a plurality of R²'s and R³'s present in the D unit is a group including at least one of an alkyl group or an aryl group.

In the T unit and the D unit, the organic group of R¹, R², and R³ in the formulae represents, for example, a hydroxyl group, a siloxy group, a hydrocarbon group, a hydrocarbon group in which one or a plurality of methylene groups are replaced with a carbonyl group, a hydrocarbon group in which one or a plurality of carbon atoms are replaced with a heteroatom (an oxygen atom, a nitrogen atom, or a sulfur atom), or a group obtained by combining these groups.

Examples of the siloxy group described as the organic group represented by R¹, R², and R³ include a monoalkylsiloxy group, a dialkylsiloxy group, and a trialkylsiloxy group; and for example, a dialkylsiloxy group or a trialkylsiloxy group is preferable, and a trialkylsiloxy group is more preferable.

Examples of the hydrocarbon group described as the organic group represented by R¹, R², and R³ include an aliphatic hydrocarbon group and an aromatic hydrocarbon group.

Examples of the aliphatic hydrocarbon group include a linear, branched, or alicyclic saturated aliphatic hydrocarbon group, and a linear, branched, or alicyclic unsaturated aliphatic hydrocarbon group.

The aliphatic hydrocarbon group is, for example, preferably a hydrocarbon group having 1 or more and 20 or less carbon atoms, and more preferably a hydrocarbon group having 1 or more and 15 or less carbon atoms.

The aliphatic hydrocarbon group may be substituted with a substituent such as a halogen atom, a hydroxyl group, an amino group, and an aryl group.

Examples of the aromatic hydrocarbon group include a hydrocarbon group having 6 or more and 18 or less carbon atoms (for example, preferably 6 or more and 14 or less carbon atoms). Examples of the aromatic hydrocarbon group include a phenyl group, a naphthyl group, and an anthracenyl group.

The aromatic hydrocarbon group may be substituted with a substituent such as a halogen atom, a hydroxyl group, an amino group, an alkyl group, and an alkoxy group.

The organic group represented by R¹, R², and R³ may have a reactive group. Examples of the reactive group include a vinyl group, an allyl group, a styryl group, a maleimide group, an epoxy group, and a (meth)acryloyl group. That is, the polysiloxane compound particles may be cured particles in which the above-described reactive group is reacted.

From the viewpoint of imparting flexibility to the polysiloxane compound particles and suppressing the occurrence of cracks in the surface layer, for example, it is preferable that the organic group represented by R¹, R², and R³ does not include the reactive group.

A plurality of R¹'s, R²'s, and R³'s present in the T unit and the D unit may be the same organic group or different organic groups.

However, at least one R¹, R², or R³ among the plurality of R¹'s, R²'s, and R³'s present in the T unit is a group including at least one of an alkyl group or an aryl group.

In addition, at least one R¹, R², or R³ among the plurality of R¹'s, R²'s, and R³'s present in the D unit is, for example, preferably a group including at least one of an alkyl group or an aryl group.

That is, at least one R¹ among the plurality of R¹'s present in the T unit is a group including at least one of an alkyl group or an aryl group.

For example, it is preferable that at least one R² among the plurality of R²'s present in the D unit is a group including at least one of an alkyl group or an aryl group.

For example, it is preferable that at least one R³ among the plurality of R³'s present in the D unit is a group including at least one of an alkyl group or an aryl group.

Here, from the viewpoint of improving the adhesiveness characteristic, as the group including an alkyl group, for example, an alkyl group itself or a siloxy group including an alkyl group is preferable. That is, at least one of a plurality of R's present in the structure A is, for example, preferably an alkyl group or a siloxy group containing an alkyl group.

From the viewpoint of improving the adhesiveness characteristic, the alkyl group is, for example, preferably an alkyl group having 1 or more and 6 or less carbon atoms, and more preferably an alkyl group having 1 or more and 4 or less carbon atoms or an alkyl group having 1 carbon atom (that is, a methyl group).

As the group including an aryl group, for example, an aryl group itself or an aralkyl group is preferable.

Examples of the aryl group include a phenyl group and a naphthyl group.

Examples of an alkyl group in the aralkyl group include a linear or branched alkyl group having 1 or more and 4 or less carbon atoms. Examples of an aryl group in the aralkyl group include a phenyl group and a naphthyl group. Examples of the aralkyl group include a benzyl group, a 1-phenylethyl group, a 2-phenylethyl group, and a 2-methyl-2-phenylethyl group.

From the viewpoint of improving the adhesiveness characteristic, as the group including an aryl group, for example, a phenyl group is preferable.

From the viewpoint of improving the cleaning performance, for example, it is preferable that a presence proportion of the group including at least one of an alkyl group or an aryl group is high with respect to the polysiloxane compound particles.

In the T unit and the D unit, m and n in the formulae represent an integer of 2 or more; and from the viewpoint of improving the cleaning performance, for example, an integer of 8 or more is preferable, and an integer of 8 or more and 10,000 or less is more preferable.

In the T unit and the D unit, the lower limit of a ratio m/n of m and n in the formulae is, for example, preferably 100/0 or more, and more preferably 100/1 or more. In addition, the upper limit of m/n is, for example, preferably 10/90 or less, more preferably 20/80 or less, and still more preferably 25/75 or less.

The ratio m/n, that is, the ratio of the T unit and the D unit is measured as follows. The ratio m/n is calculated based on the peak ratio of the D unit (high ppm side) and the T unit (low ppm side) by solid ²⁹Si NMR.

Examples of the polysiloxane compound particles include polymer compound particles referred to as silsesquioxane (SQ) having various skeleton structures.

The polysiloxane compound particles may have, as a skeleton structure, any of a cage-type structure (a perfect cage-type structure or a cage-type structure), a ladder-type structure, or a random structure.

### -Content of Polysiloxane Compound Particles-

The content of the polysiloxane compound particles is 100 parts by mass or more and 250 parts by mass or less with respect to 100 parts by mass of the binding material, and is, for example, preferably 140 parts by mass or more and 220 parts by mass or less, and more preferably 160 parts by mass or more and 200 parts by mass or less.

In a case where the content of the polysiloxane compound particles is less than 100 parts by mass, the release properties of the surface layer are reduced, and thus the cleaning performance is deteriorated.

In a case where the content of the polysiloxane compound particles is more than 250 parts by mass, the surface layer is brittle, and cracks occur.

### -Exposure Rate of Polysiloxane Compound Particles-

The exposure rate of the polysiloxane compound particles (that is, a proportion of the polysiloxane compound particles exposed on the surface of the surface layer) is 30% or more and 75% or less, and is, for example, preferably 45% or more and 65% or less, and more preferably 50% or more and 60% or less.

In a case where the exposure rate of the polysiloxane compound particles is less than 30%, the release properties of the surface layer are reduced, and thus the cleaning performance is deteriorated.

In a case where the exposure rate of the polysiloxane compound particles is more than 75%, the surface layer is brittle, and cracks occur. In addition, the polysiloxane compound particles fall off from the surface layer by cleaning the member, the release properties of the surface layer are reduced, and thus the cleaning performance is deteriorated.

The exposure rate of the polysiloxane compound particles can be controlled, for example, by polishing the surface layer.

A method of measuring the exposure rate of the polysiloxane compound particles is as follows.

A sample in which the surface of the surface layer is used as a measurement surface is obtained from a sliding member to be measured.

Narrow XPS spectral analysis is performed on the measurement surface of the sample under the conditions of an X-ray source = MgKα and an X-ray output = 100 W (10 kV-10 mA) using a photoelectron spectrometer (XPS; "JPS-9030" manufactured by JEOL Ltd.). The element to be measured is C, Si, O, and N. As a result, a Si element compositional ratio A (atm%) is obtained.

On the other hand, the same narrow XPS spectral analysis is performed on the polysiloxane compound particles. As a result, a Si element compositional ratio B (atm%) is obtained as a theoretical Si element compositional ratio in a case where the exposure rate of the polysiloxane compound particles is 100%.

Next, an exposure rate (%) of the polysiloxane compound particles is calculated by the following expression. $Exposure rate of polysiloxane compound particles = A / B \times 100 \left(%\right)$

### -Particle Diameter of Polysiloxane Compound Particles-

A volume average particle diameter of the polysiloxane compound particles is, for example, preferably 3.0 µm or less, more preferably 1.0 µm or less, and still more preferably 0.8 µm or less. However, from the viewpoint of suppressing a decrease in release properties due to aggregation (that is, suppressing a decrease in cleaning performance), the volume average particle diameter of the polysiloxane compound particles is, for example, preferably 0.01 µm or more.

In a case where the volume average particle diameter of the polysiloxane compound particles is 3.0 µm or less, the polysiloxane compound particles are uniformly dispersed on the surface layer, are easily exposed in a state close to being uniform on the surface layer, and thus the release properties are improved. As a result, the cleaning performance is improved.

The volume average particle diameter of the polysiloxane compound particles is measured as follows.

A sample is collected from the surface layer. The sample is a sample in which a cut surface along a thickness direction of the surface layer is used as an observation surface.

The observation surface of the sample is observed with a scanning electron microscope to capture an image. In the image, an area of each primary particle of the polysiloxane compound particles is measured by image analysis, and an equivalent circle diameter thereof is calculated from this area value. The calculation of the equivalent circle diameter is carried out for 100 particles of the polysiloxane compound particles. A 50% diameter (D50v) in the volume-based cumulative frequency of the obtained equivalent circle diameter is defined as the volume average particle diameter of the polysiloxane compound particles.

### -Binding Material-

Examples of the binding material include a resin material and an elastic material.

Examples of the resin material include a polyamide resin, a polyurethane resin, a polyester resin, a polyimide resin, a silicone resin, an acrylic resin, a polyvinyl butyral resin, an ethylene-tetrafluoroethylene copolymer resin, a melamine resin, an epoxy resin, a polycarbonate resin, a polyvinyl alcohol resin, a cellulose resin, a polyvinylidene chloride resin, a polyvinyl chloride resin, a polyethylene resin, and an ethylene-vinyl acetate copolymer resin.

Examples of the elastic material include isoprene rubber, chloroprene rubber, epichlorohydrin rubber, butyl rubber, polyurethane rubber, silicone rubber, fluororubber, styrene-butadiene rubber, butadiene rubber, nitrile rubber, ethylene-propylene rubber, epichlorohydrin-ethylene oxide copolymer rubber, epichlorohydrin-ethylene oxide-allyl glycidyl ether copolymer rubber, ethylene-propylene-diene terpolymer rubber (EPDM), acrylonitrile-butadiene copolymer rubber (NBR), natural rubber, and blended rubber thereof.

In particular, as the binding material, for example, polyurethane is preferable. The polyurethane may be acrylic polyurethane, polyester polyurethane, polyether polyurethane resin, or the like. Among these, as the polyurethane, for example, a silicone-modified urethane is preferable, and a silicone-modified acrylic urethane is more preferable.

A content of the binding material is an amount of the principal component of the surface layer. Here, the amount of the principal component of the surface layer means an amount of the most abundant component among the components contained in the surface layer, excluding the polysiloxane compound particles.

### -Conductive Agent-

Examples of the conductive agent include carbon black, metals (for example, aluminum, nickel, or the like), a metal oxide (for example, yttrium oxide, tin oxide, or the like), carbon nanotubes, and an ion conducting substance (for example, potassium titanate, LiCl, or the like), and among these, for example, carbon black is preferable.

Each of these conductive agents may be used alone, or two or more of these conductive agents may be used in combination.

Examples of the carbon black include Ketjen black, oil furnace black, channel black (that is, gas black), and acetylene black. As the carbon black, carbon black subjected to a surface treatment (hereinafter, also referred to as "surface-treated carbon black") may be used.

The surface-treated carbon black is obtained by adding, for example, a carboxy group, a quinone group, a lactone group, a hydroxy group, or the like to the surface of the carbon black. Examples of the surface treatment method include an air oxidation method of reacting the carbon black by bringing the carbon black into contact with air in a high temperature atmosphere, a method of reacting the carbon black with nitrogen oxide or ozone at room temperature (for example, 22°C), and a method of oxidizing the carbon black with air in a high temperature atmosphere and then with ozone at a low temperature.

Among these, for example, the conductive agent may be channel black, and particularly, may be acidic carbon black having a pH of 5.0 or less.

Examples of the acidic carbon black include carbon black in which a surface is oxidatively treated, such as carbon black obtained by imparting a carboxyl group, a quinone group, a lactone group, a hydroxyl group, or the like to the surface.

The acidic carbon black is, for example, preferably carbon black having a pH of 4.5 or less, more preferably acidic carbon black having a pH of 4.0 or less, still more preferably acidic carbon black having a pH of 3.0 or less, particularly preferably acidic carbon black having a pH of 2.0 or more and 3.0 or less, and extremely preferably acidic carbon black having a pH of 2.0 or more and 2.8 or less.

The pH of the acidic carbon black is a value measured by a pH measuring method specified in JIS Z8802 (2011).

A content of the conductive agent with respect to the surface layer is, for example, preferably 5% by mass or more and 30% by mass or less, more preferably 10% by mass or more and 30% by mass or less, and still more preferably 15% by mass or more and 30% by mass or less.

### -Other Additives-

As the other additives, well-known additives such as a reinforcing agent, an antioxidant, a surfactant, and a heat aging inhibitor can be appropriately selected depending on the various uses of the electrophotographic member.

A content of the other additives with respect to the surface layer is, for example, preferably 30% by mass or less, more preferably 20% by mass or less, and still more preferably 10% by mass or less.

### ((Surface Aspect of Surface Layer))

The surface of the surface layer is, for example, preferably a polished surface. By forming the surface of the surface layer into a polished surface, the above-described exposure rate of the polysiloxane compound particles in the surface layer can be controlled to be 30% or more and 75% or less while the content of the polysiloxane compound particles is within the above-described range by polishing.

Specifically, a ten-point average roughness Rz on the surface of the surface layer is, for example, preferably 0.1 µm or more and 5.0 µm or less, and more preferably 0.1 µm or more and 3.0 µm or less.

By setting the ten-point average roughness Rz on the surface of the surface layer to be within the above-described range, the decrease in cleaning performance is suppressed.

The ten-point average roughness Rz on the surface of the surface layer is measured in accordance with JIS B 0601:1994.

Specifically, the ten-point average roughness Rz is measured using a contact type surface roughness measuring device (SURFCOM 570A, manufactured by Tokyo Seimitsu Co., Ltd.) in an environment of 23°C and 55 %RH. As a touch probe, a touch probe tipped with diamond (5 µmR, 90° cone) is used. As measurement conditions, the touch probe is the touch probe tipped with diamond (5 µmR, 90° cone), a measurement distance is 2.5 mm, a cutoff wavelength is 0.8 mm, and a measurement speed is 0.50 mm/s.

The measurement site is in the central portion of the surface of the surface layer in the width direction, the roughness is measured at 3 sites, and an average value thereof is calculated.

### ((Thickness of Surface Layer))

A thickness of the surface layer is, for example, preferably 5 µm or more and 30 µm or less, more preferably 8 µm or more and 25 µm or less, and still more preferably 10 µm or more and 20 µm or less.

In a case where the thickness of the surface layer is 5 µm or more, the influence of the roughness of the lower layer is likely to be received, and thus the deterioration of cleaning performance is suppressed.

In a case where the thickness of the surface layer is 30 µm or less, the occurrence of cracks in the surface layer is suppressed.

The thickness of the surface layer is measured by observing a cross section of the surface layer using an optical microscope.

Specifically, a cross section of the surface layer, cut along the thickness direction of the surface layer, is observed. In the cross section observation, thicknesses of the surface layer at three locations are measured and arithmetically averaged.

### (Resin Layer)

The resin layer contains a resin material. The resin layer may contain a conductive agent, other additives, and the like.

The resin layer may be a layer that functions as an interlayer of the electrophotographic member or a layer that functions as a base material layer.

### -Resin Material-

Examples of the resin material include a polyimide resin (PI resin), a polyamide-imide resin (PAI resin), an aromatic polyether ketone resin (for example, an aromatic polyether ether ketone resin or the like), a polyphenylene sulfide resin (PPS resin), and a polyetherimide resin (PEI resin), a polyester resin, a polyamide resin, and a polycarbonate resin.

### -Conductive Agent-

Examples of the conductive agent contained in the resin layer include the same examples as the conductive agents exemplified for the surface layer.

In a case of the conductive agent described above, a content of the conductive agent contained in the resin layer is, for example, preferably in a range of 1% by mass or more and 50% by mass or less and more preferably in a range of 10% by mass or more and 30% by mass or less with respect to the elastic material.

### -Other Additives-

As the other additives contained in the resin layer, well-known additives such as a reinforcing agent, an antioxidant, a surfactant, and a heat aging inhibitor can be appropriately selected depending on the various uses of the electrophotographic member.

A content of the other additives with respect to the resin layer is, for example, preferably 30% by mass or less, more preferably 20% by mass or less, and still more preferably 10% by mass or less.

### (Elastic Layer)

The elastic layer contains an elastic material. The elastic layer may contain a conductive agent, other additives, and the like.

The elastic layer may be a layer that functions as an interlayer of the electrophotographic member or a layer that functions as a base material layer.

The elastic layer refers to a layer that is deformed by an external force of 100 Pa but is restored to the original shape.

### -Elastic Material-

Examples of the elastic material include isoprene rubber, chloroprene rubber, epichlorohydrin rubber, butyl rubber, polyurethane rubber, silicone rubber, fluororubber, styrene-butadiene rubber, butadiene rubber, nitrile rubber, ethylene-propylene rubber, epichlorohydrin-ethylene oxide copolymer rubber, epichlorohydrin-ethylene oxide-allyl glycidyl ether copolymer rubber, ethylene-propylene-diene terpolymer rubber (EPDM), acrylonitrile-butadiene copolymer rubber (NBR), natural rubber, and blended rubber thereof. Among these, polyurethane, silicone rubber, EPDM, epichlorohydrin-ethylene oxide copolymer rubber, NBR, or a blend rubber thereof is used. These elastic materials may be foamed or unfoamed.

A content of the elastic material is an amount of the principal component of the elastic layer. Here, the amount of the principal component of the elastic layer means an amount of the component that is the highest among components contained in the elastic layer.

### -Conductive Agent-

Examples of the conductive agent contained in the elastic layer include the same examples as the conductive agents exemplified for the surface layer.

In a case of the conductive agent described above, a content of the conductive agent contained in the elastic layer is, for example, preferably in a range of 1% by mass or more and 50% by mass or less and more preferably in a range of 10% by mass or more and 30% by mass or less with respect to the elastic material.

### -Other Additives-

As the other additives contained in the elastic layer, well-known additives such as a reinforcing agent, an antioxidant, a surfactant, and a heat aging inhibitor can be appropriately selected depending on the various uses of the electrophotographic member.

A content of the other additives with respect to the elastic layer is, for example, preferably 30% by mass or less, more preferably 20% by mass or less, and still more preferably 10% by mass or less.

### (Metal Base Material)

Examples of the metal base material include a metal belt or a metal tubular body, formed of nickel, aluminum, stainless steel, or the like.

### (Other Layers)

The electrophotographic member according to the present exemplary embodiment may include a metal heat generation layer that is heated by electromagnetic induction, in addition to the surface layer, the elastic layer, the resin layer, and the metal base material.

### (Application)

The electrophotographic member according to the present exemplary embodiment is applied to, for example, an electrophotographic member such as a transfer member (a transfer belt, a transfer roll, or the like), a charging member (a charging roll, a charging film, or the like), a fixing member (a fixing roll, a fixing belt, or the like), and a transport member (a transport roll, a transport belt, or the like).

### <Method of Manufacturing Electrophotographic Member>

A method of manufacturing the electrophotographic member according to the present exemplary embodiment includes a step of forming a polysiloxane compound particle-containing layer that contains the binding material and the polysiloxane compound particles (hereinafter, also referred to as "particle-containing layer forming step"); and a step of polishing a surface of the polysiloxane compound particle-containing layer to form the polished polysiloxane compound particle-containing layer into a surface layer (hereinafter, also referred to as "polishing step").

### (Particle-containing Layer Forming Step)

In the particle-containing layer forming step, for example, a coating liquid containing the binding material or a precursor of the binding material, the polysiloxane compound particles, and a solvent is prepared. Here, a formulation of the coating liquid to be prepared is set such that the content of the polysiloxane compound particles with respect to 100 parts by mass of the binding material in the obtained surface layer is within the above-described range.

On the other hand, for example, an object to be coated, on which the coating liquid is to be applied, is prepared. Here, in a case of obtaining an electrophotographic member consisting of a monolayer, a mold corresponds to the object to be coated; and in a case of obtaining an electrophotographic member consisting of a laminate, a member (for example, a member consisting of a resin layer, an elastic layer, a base material, or a laminate of these layers) other than the surface layer of the target electrophotographic member is prepared.

The obtained coating liquid is applied onto the surface of the object to be coated, and then heated and dried to obtain a polysiloxane compound particle-containing layer. Here, in a case where a precursor of the binding material (for example, a polyimide resin precursor) is applied, the precursor is heated at a temperature at which the precursor is used as the binding material.

### (Polishing Step)

In the polishing step, for example, the surface of the polysiloxane compound particle-containing layer is polished by a film polishing machine.

Polishing conditions are not particularly limited, but are set such that the exposure rate of the siloxane compound in the obtained surface layer is within the above-described range. In particular, desired polishing conditions are conditions of selecting a polishing sheet having a mesh number such that the ten-point average roughness Rz on the surface of the surface layer is within the above-described range.

Through the above-described steps, the electrophotographic member according to the present exemplary embodiment is obtained.

### <Transfer Device>

The transfer device according to the present exemplary embodiment includes a transfer member configured of the electrophotographic member according to the present exemplary embodiment.

The transfer device according to the present exemplary embodiment includes, for example, an intermediate transfer body to which a toner image is transferred onto a surface, a primary transfer device including a primary transfer member that performs primary transfer of the toner image onto the surface of the intermediate transfer body, and a secondary transfer device including a secondary transfer member that performs secondary transfer of the toner image transferred onto the surface of the intermediate transfer body to a surface of a recording medium.

In the transfer device according to the present exemplary embodiment, the electrophotographic member according to the present exemplary embodiment described above is applied to any of the intermediate transfer body, the primary transfer member, or the secondary transfer member.

### (Primary Transfer Device)

In the primary transfer device, the primary transfer member is disposed to face the image holder across the intermediate transfer belt. In the primary transfer device, a voltage with polarity opposite to charging polarity of a toner is applied to the intermediate transfer belt by the primary transfer member, whereby a toner image is primarily transferred to the outer peripheral surface of the intermediate transfer body.

### (Secondary Transfer Device)

In the secondary transfer device, the secondary transfer member is disposed on a toner image-holding side of the intermediate transfer body. The secondary transfer device includes, for example, a secondary transfer member and a back surface member that is disposed on the side opposite to the toner image-holding side of the intermediate transfer body. In the secondary transfer device, the intermediate transfer body and the recording medium are interposed between the secondary transfer member and the back surface member, and a transfer electric field is formed. In this way, secondary transfer of the toner image formed on the intermediate transfer body to the recording medium is performed.

The secondary transfer member may be a secondary transfer roll or a secondary transfer belt. As the back surface member, for example, a back roll is used.

The transfer device according to the present exemplary embodiment may be a transfer device that transfers a toner image to the surface of a recording medium via a plurality of intermediate transfer bodies. That is, the transfer device may be, for example, a transfer device in which a toner image is primarily transferred to a first intermediate transfer body from an image holder, the toner image is secondarily transferred to a second intermediate transfer body from the first intermediate transfer body, and then the toner image is tertiarily transferred to a recording medium from the second intermediate transfer body.

### <Charging Device>

The charging device according to the present exemplary embodiment includes a charging member configured of the electrophotographic member according to the present exemplary embodiment.

The charging member is a member that charges a surface of a charging target, and examples thereof include a contact type charging member using a charging roll, a charging film, a charging rubber blade, a charging tube, or the like.

The electrophotographic member according to the present exemplary embodiment described above is applied to these charging members.

### <Image Forming Apparatus>

The image forming apparatus according to the present exemplary embodiment includes:
an image holder;
a charging device that charges a surface of the image holder;
an electrostatic latent image forming device that forms an electrostatic latent image on the charged surface of the image holder;
a developing device that accommodates a developer containing a toner and develops the electrostatic latent image formed on the surface of the image holder with the developer to form a toner image;
a transfer device that transfers the toner image onto a surface of a recording medium; and
a fixing device that fixes the toner image on the surface of the recording medium.

As the charging device, the charging device according to the present exemplary embodiment described above is used. In addition, as the transfer device, the transfer device according to the present exemplary embodiment described above is used.

In the image forming apparatus according to the present exemplary embodiment, the transfer device may be made into each cartridge such that the transfer device is detachable from an image forming apparatus. That is, the image forming apparatus according to the present exemplary embodiment may include the transfer device according to the present exemplary embodiment, as a device configuring a process cartridge.

Hereinafter, the image forming apparatus according to the present exemplary embodiment will be described with reference to a drawing.

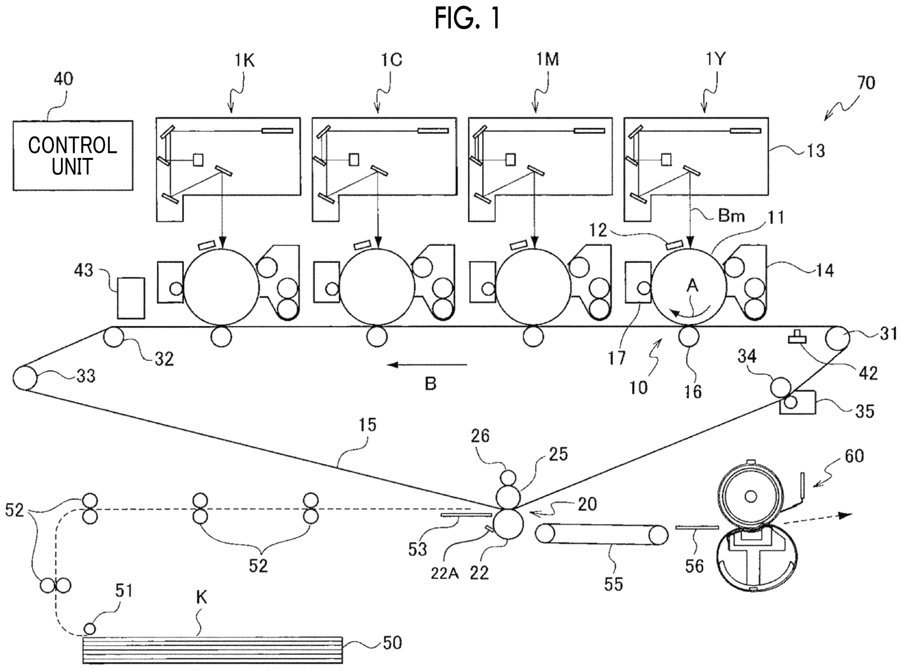

FIG. 1 is a schematic configuration view showing a configuration of the image forming apparatus according to the present exemplary embodiment.

As shown in FIG. 1, an image forming apparatus 100 according to the present exemplary embodiment is, for example, an intermediate transfer-type image forming apparatus generally called a tandem type.

The image forming apparatus 100 includes a plurality of image forming units 1Y, 1M, 1C, and 1K, an intermediate transfer belt 15, a primary transfer unit 10, a secondary transfer unit 20, and the fixing device 60. In addition, the image forming apparatus 100 includes a control unit 40 that controls the operation of each device (or each unit).

Here, the image forming units 1Y, 1M, 1C, and 1K are image forming units that form a toner image of each color component by an electrophotographic method.

The primary transfer unit 10 is a transfer unit that sequentially transfers (primary transfers) the toner image of each color component formed by the image forming units 1Y, 1M, 1C, and 1K to the intermediate transfer belt 15.

The secondary transfer unit 20 is a transfer unit that collectively transfers (secondary transfers) the superimposed toner images transferred to the intermediate transfer belt 15 to the paper K that is the recording medium.

The fixing device 60 is a device that fixes the image transferred by the secondary transfer to the paper K.

Each of the image forming units 1Y, 1M, 1C, and 1K of the image forming apparatus 100 includes a photoreceptor 11 that rotates in a direction of an arrow A, as an example of an image holder that holds a toner image formed on the surface.

Around the photoreceptor 11, a charger 12 that charges the photoreceptor 11 is provided as an example of the charging device. Around the photoreceptor 11, a laser exposure device 13 (exposure beam is indicated by a reference numeral Bm in the drawing) that writes an electrostatic latent image on the photoreceptor 11 is provided as an example of the electrostatic latent image forming device.

Around the photoreceptor 11, a developer 14 that accommodates the toner of each color component and visualizes the electrostatic latent image on the photoreceptor 11 with the toner is provided as an example of the developing device.

Around the photoreceptor 11, a primary transfer roll 16 that transfers the toner image of each color component formed on the photoreceptor 11 to the intermediate transfer belt 15 by the primary transfer unit 10 is provided.

Around the photoreceptor 11, a photoreceptor cleaner 17 that removes a residual toner on the photoreceptor 11 is provided.

The charger 12, the laser exposure device 13, the developer 14, the primary transfer roll 16, and the photoreceptor cleaner 17 are sequentially arranged around the photoreceptor 11 along the rotation direction of the photoreceptor 11.

These image forming units 1Y, 1M, 1C, and 1K are substantially linearly arranged in order of yellow (Y), magenta (M), cyan (C), and black (K) from the upstream side of the intermediate transfer belt 15.

By various rolls, the intermediate transfer belt 15 is driven to circulate (rotate) in the direction of an arrow B shown in FIG. 1 at a speed fit for the purpose.

The various rolls include a drive roll 31, a support roll 32, a tension applying roll 33, a back roll 25, and a cleaning back roll 34.

The drive roll 31 is a roll that is driven by a motor (not shown) having an excellent constant speed property and rotates the intermediate transfer belt 15.

The support roll 32 is a roll that supports the intermediate transfer belt 15 extending in a substantially linear shape along the arrangement direction of each photoreceptor 11.

The tension applying roll 33 is a roll that is provided in the secondary transfer unit 20, has a function of applying a tension to the intermediate transfer belt 15, and prevents the intermediate transfer belt 15 from meandering.

The cleaning back roll 34 is a roll that is provided in a cleaning portion that scrapes off the residual toner on the intermediate transfer belt 15.

The primary transfer unit 10 is configured with the primary transfer roll 16 that is disposed to face the photoreceptor 11 across the intermediate transfer belt 15.

The primary transfer roll 16 is disposed to be pressed against the photoreceptor 11 with the intermediate transfer belt 15 therebetween, and a voltage with a polarity (primary transfer bias) opposite to the charging polarity (negative polarity; the same applies hereafter) of the toner is applied to the primary transfer roll 16. As a result, the toner image on each photoreceptor 11 is sequentially electrostatically sucked onto the intermediate transfer belt 15, which leads to the formation of overlapped toner images on the intermediate transfer belt 15.

The secondary transfer unit 20 is configured to include the back roll 25 and a secondary transfer roll 22 that is disposed on a toner image-holding surface side of the intermediate transfer belt 15.

The secondary transfer roll 22 is disposed to be pressed on the back roll 25 across the intermediate transfer belt 15, and the secondary transfer roll 22 is grounded such that the secondary transfer bias is formed between the secondary transfer roll 22 and the back roll 25, that induces secondary transfer of the toner image onto the paper K transported to the secondary transfer unit 20.

In addition, an intermediate transfer belt cleaner 35 is provided on the downstream side of the secondary transfer unit 20 on the intermediate transfer belt 15 to be freely attachable to and detachable from the intermediate transfer belt 15.

The intermediate transfer belt cleaner 35 is a cleaner that removes the residual toner or paper powder on the intermediate transfer belt 15 after the secondary transfer, and cleans the surface of the intermediate transfer belt 15.

The intermediate transfer belt 15, the primary transfer unit 10 (primary transfer roll 16), and the secondary transfer unit 20 (secondary transfer roll 22) correspond to an example of the transfer device.

The image forming apparatus 100 may have a configuration in which the apparatus includes a secondary transfer belt instead of the secondary transfer roll 22.

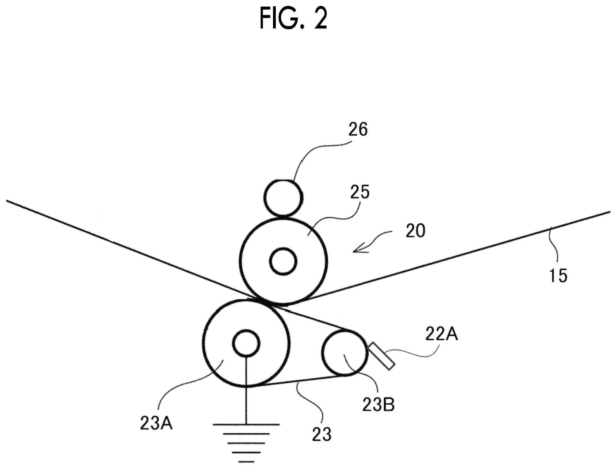

Specifically, as shown in FIG. 2, the image forming apparatus 100 may include a secondary transfer device including a secondary transfer belt 23, a drive roll 23A, and an idle roll 23B.

The drive roll 23A is a roll that is disposed to face the back roll 25 through the intermediate transfer belt 15 and the secondary transfer belt 23.

The idle roll 23B is a roll that tensions the secondary transfer belt 23 together with the drive roll 23A.

On the other hand, a reference sensor (home position sensor) 42 is disposed on an upstream side of the yellow image forming unit 1Y.

The reference sensor 42 is a sensor that generates a reference signal serving as a reference for taking an image forming timing in each of the image forming units 1Y, 1M, 1C, and 1K.

The reference sensor 42 recognizes a mark provided on a back side of the intermediate transfer belt 15 to generate the reference signal. Each of the image forming units 1Y, 1M, 1C, and 1K is configured to start the image formation in response to an instruction from the control unit 40 based on the recognition of the reference signal.

An image density sensor 43 used to adjust image quality is provided on the downstream side of the black image forming unit 1K.

The image forming apparatus 100 includes a paper storage portion 50, a paper feeding roll 51, a transport roll 52, a transport guide 53, a transport belt 55, and a fixing inlet guide 56.

The paper storage portion 50 is a storage portion that accommodates the paper K, as a transport device that transports the paper K.

The paper feeding roll 51 is a roll that takes out the paper K accumulated in the paper storage portion 50 at a predetermined timing, and transports the paper K.

The transport roll 52 is a roll that transports the paper K fed by the paper feeding roll 51.

The transport guide 53 is a guide that feeds the paper K transported by the transport roll 52 to the secondary transfer unit 20.

The transport belt 55 is a belt that transports the paper K, that is secondarily transferred by the secondary transfer roll 22, to the fixing device 60.

The fixing inlet guide 56 is a guide that guides the paper K to the fixing device 60.

Next, basic image forming process of the image forming apparatus 100 according to the present exemplary embodiment will be described.

In the image forming apparatus 100 according to the present exemplary embodiment, image data output from an image reading device (not shown), a personal computer (PC) (not shown), or the like is subjected to image processing by an image processing device (not shown), and then the image forming units 1Y, 1M, 1C, and 1K perform the image forming operation.

In the image processing device, various types of image processing, such as shading correction, misregistration correction, brightness/color space conversion, gamma correction, frame removal or color editing, and movement editing, are performed on input image data. The image data that has been subjected to the image processing is converted into color material gradation data of four colors of yellow (Y), magenta (M), cyan (C), and black (K), and is output to the laser exposure device 13.

In the laser exposure device 13, according to the input color material gradation data, for example, the photoreceptor 11 of each of the image forming units 1Y, 1M, 1C, and 1K is irradiated with an exposure beam Bm emitted from a semiconductor laser. The surface of each of the photoreceptors 11 of the image forming units 1Y, 1M, 1C, and 1K is charged by the charger 12, and is then scanned and exposed by the laser exposure device 13, so that the electrostatic latent image is formed. By each of the image forming units 1Y, 1M, 1C, and 1K, the formed electrostatic latent image is developed as a toner image of each of the colors of yellow (Y), magenta (M), cyan (C), and black (K).

The toner image formed on each of the photoreceptors 11 of the image forming units 1Y, 1M, 1C, and 1K is transferred onto the intermediate transfer belt 15 at the primary transfer unit 10 where each photoreceptor 11 and the intermediate transfer belt 15 are in contact with each other. More specifically, in the primary transfer unit 10, by the primary transfer roll 16, a voltage (primary transfer bias) with a polarity opposite to the charging polarity (negative polarity) of the toner is applied to the base material of the intermediate transfer belt 15, and the toner images are sequentially overlapped on the surface of the intermediate transfer belt 15 and subjected to primary transfer.

After the primary transfer by which the toner images are sequentially transferred to the surface of the intermediate transfer belt 15, the intermediate transfer belt 15 moves, and the toner images are transported to the secondary transfer unit 20. In a case where the toner images are transported to the secondary transfer unit 20, in the transport device, the paper feeding roll 51 rotates in accordance with the timing at which the toner images are transported to the secondary transfer unit 20, and the paper K having the target size is fed from the paper storage portion 50. The paper K fed from the paper feeding roll 51 is transported by the transport roll 52, passes through the transport guide 53, and reaches the secondary transfer unit 20. The paper K is temporarily stopped before reaching the secondary transfer unit 20. The position alignment roll (not shown) rotates in accordance with the movement timing of the intermediate transfer belt 15 on which the toner image is held, and the position of the paper K and the position of the toner image are aligned.

In the secondary transfer unit 20, via the intermediate transfer belt 15, the secondary transfer roll 22 is pressed on the back roll 25. At this time, the paper K transported at the right timing is interposed between the intermediate transfer belt 15 and the secondary transfer roll 22. At this time, in a case where a voltage (secondary transfer bias) with the same polarity as the charging polarity (negative polarity) of the toner is applied from the power supply roll 26, a transfer electric field is formed between the secondary transfer roll 22 and the back roll 25. In the secondary transfer unit 20 pressed by the secondary transfer roll 22 and the back roll 25, the unfixed toner images held on the intermediate transfer belt 15 are electrostatically transferred onto the paper K in a batch.

Thereafter, the paper K on which the toner image is electrostatically transferred is transported as it is in a state of being peeled off from the intermediate transfer belt 15 by the secondary transfer roll 22. The paper K is transported to the transport belt 55 provided on a downstream side of the secondary transfer roll 22 in the paper transport direction. The transport belt 55 transports the paper K to the fixing device 60 according to the optimum transport speed in the fixing device 60. The unfixed toner images on the paper K transported to the fixing device 60 are fixed on the paper K by being subjected to a fixing treatment by heat and pressure by the fixing device 60. The paper K on which the fixed image is formed is transported to an ejected paper-storing portion (not shown) provided in an output portion of the image forming apparatus 100.

On the other hand, after the transfer to the paper K is completed, the residual toner remaining on the intermediate transfer belt 15 is transported to the cleaning unit with the rotation of the intermediate transfer belt 15. The residual toner is removed from the intermediate transfer belt 15 by the cleaning back roll 34 and the intermediate transfer belt cleaner 35.

Although the present exemplary embodiment has been described, the present exemplary embodiment is not limited to the above-described exemplary embodiments, and various modifications, changes, and ameliorations can be added thereto.

### [Examples]

Hereinafter, the present exemplary embodiment will be described in more detail with reference to Examples, but the present exemplary embodiment is not limited to Examples. In the following description, "part" represents "part by mass" unless otherwise specified.

### <Example 1>

### [Formation of Elastic Layer]

As an elastic foaming body, EP70 (manufactured by INOAC CORPORATION) is used. The elastic foaming body is polished and molded into a cylindrical shape having an outer diameter of 26 mm, an inner diameter of 15 mm, and a length of 350 mm to obtain a cylindrical elastic foaming body.

As a treatment liquid, a conductive treatment liquid is obtained by mixing, in a mass ratio of 1:1, a water dispersion body containing and dispersing 36% by mass of carbon black and an acrylic emulsion (manufactured by Zeon Corporation, product name "Nipol LX852"). The cylindrical elastic foaming body is dipped in the conductive treatment liquid at 20°C for 10 minutes.

Thereafter, the elastic foaming body to which the conductive treatment liquid has adhered is heated and dried for 60 minutes in a curing furnace set to 100°C, such that water is removed and the acrylic resin is crosslinked. On an exposed surface of the elastic foaming body, a conductive coating layer containing carbon black is formed of the acrylic resin cured by crosslinking.

In this way, an elastic layer configured with an elastic foaming body and a conductive coating layer that coats an exposed surface of the elastic foaming body is obtained.

Next, a roll member is obtained by inserting a conductive support member (made of SUS, diameter of 15 mm) having a surface to which an adhesive is applied, to the obtained elastic layer.

### [Formation of Interlayer]

70 parts by mass of a urethane oligomer (manufactured by Nippon Synthetic Chemical Co., Ltd., Urethane acrylate UV3700B), 30 parts by mass of a urethane monomer (manufactured by Kyoeisha Chemical Co., Ltd., isomyristyl acrylate), 0.5 parts by mass of a polymerization initiator (manufactured by Ciba Specialty Chemicals, 1-hydroxycyclohexylphenyl ketone Irgacure 184), and 3 parts by mass of alkyltrimethylammonium perchlorate (product name "LXN-30" manufactured by Daiso Co., Ltd.) are mixed to obtain a coating liquid for forming an interlayer.

The obtained coating liquid for forming an interlayer is applied onto the elastic layer of the roll member using a die coater, and the coating film is irradiated with UV rays at an irradiation intensity of 700 mW/cm² for 5 seconds while rotating.

With the operation, an interlayer having a thickness of 1 mm is formed.

### [Formation of Surface Layer]

100 parts by mass of X-52-854 (manufactured by Shin-Etsu Chemical Co., Ltd., "polysiloxane compound particles having a T unit represented by a formula: [R¹SiO_{3/2}]ₘ (R¹ = a methyl group)"; volume average particle diameter = 0.7 µm) as polysiloxane compound particles, and 15 parts by mass of carbon black "FW200" (manufactured by Degussa-Hüls AG) as a conductive agent are added to 100 parts by mass of silicone-modified acrylic urethane (manufactured by Henkel Japan Ltd.) as a binding material to prepare a coating liquid for forming a surface layer.

Next, the coating liquid for forming a surface layer is spray-coated on a surface of the produced interlayer, and heated and dried at 120°C for 20 minutes to form a polysiloxane compound particle-containing layer (thickness: 20 µm).

Next, the surface of the polysiloxane compound particle-containing layer is polished using a film polishing machine with a polishing sheet having a particle diameter of 1.2 µm (mesh number: #8000) to obtain a surface layer.

The polishing treatment is carried out such that the exposure rate of the polysiloxane compound particles and the ten-point average roughness Rz in the obtained surface layer are values shown in Table 1.

As a result of the above-described operation, an electrophotographic member having a diameter of 28 mm and a length of 350 mm is obtained.

### <Examples 3, 5, 8, 11, 12, 14, and Comparative Examples 1 to 3>

An electrophotographic member is obtained in the same manner as in Example 1, except that the following items are changed.
· Type and parts of polysiloxane resin particles
· Conditions of polishing treatment such that exposure rate of polysiloxane compound particles and ten-point average roughness Rz shown in Table 1 are values shown in Table 1

### <Examples 2, 4, 6, 7, 9, and 13>

An electrophotographic member is obtained in the same manner as in Example 1, except that the following items are changed.
· Type and parts of polysiloxane resin particles
· Conditions of polishing treatment such that exposure rate of polysiloxane compound particles and ten-point average roughness Rz shown in Table 1 are values shown in Table 1

### <Evaluation 1>

The electrophotographic members of Examples 3, 5, 8, 11, 12, 14, and Comparative Examples 1 to 3 are mounted on ApeosPort VII C6688 manufactured by Fuji Xerox Co., Ltd. as a secondary transfer roll (BTR). The following evaluations are performed using the obtained evaluation image forming apparatus.

### (Cleaning Performance)

After being left to stand in an environment of 10°C and 15 %RH for 24 hours, a solid image (solid image in which images of each color of yellow (Y), magenta (M), cyan (C), and black (K) having an image density of 25% are superimposed) having a density of 100% is directly transferred onto the secondary transfer roll (BTR). Thereafter, A3 paper is caused to run in the secondary transfer unit, and the presence or absence of contamination at back surface of the paper is evaluated.

### -Evaluation Standard-

S (Excellent): contamination at back surface of paper does not occur.
A (Good): extremely slight contamination at back surface of paper occurs (almost no problem).
B (Fair): slight contamination at back surface of paper occurs (acceptable)
C (Poor): unacceptable contamination at back surface of paper occurs.

### (Crack Resistance of Surface Layer)

The evaluation image forming apparatus is left to stand in an environment of 10°C and 15 %RH for 24 hours.

A halftone image (halftone image in which images of each color of yellow (Y), magenta (M), cyan (C), and black (K) having an image density of 25% are superimposed) having an image density of 12% is output on 100,000 sheets of A4 paper. Thereafter, a surface state of the surface layer of the secondary transfer roll is visually observed. The evaluation standards are as follows.
S (Excellent): no cracks occur on the surface of the surface layer.
A (Good): extremely slight cracks occur on a part of the surface of the surface layer.
B (Fair): cracks occur on a part of the surface of the surface layer.
C (Poor): cracks occur on the entire surface of the surface layer.

### <Evaluation 2>

The electrophotographic members of Examples 2, 4, 6, 7, 9, and 13 are mounted on ApeosPort VII C6688 manufactured by Fuji Xerox Co., Ltd. as a secondary transfer roll (BTR).

Next, the same evaluation as in Evaluation 1 is performed by the obtained evaluation image forming apparatus.

Details of the polysiloxane compound and the conductive material used in each of Examples are as follows.
· AcyUre: silicone-modified acrylic urethane (manufactured by Henkel Japan Ltd.)
· SQ1: X-52-854 (manufactured by Shin-Etsu Chemical Co., Ltd., "polysiloxane compound particles having a T unit represented by a formula: [R¹SiO_{3/2}]ₘ (R¹ = a methyl group)")
· SQ2: KMP-706, manufactured by Shin-Etsu Chemical Co., Ltd., "polysiloxane compound particles having a T unit represented by a formula: [R¹SiO_{3/2}]ₘ (R¹ = a methyl group)"; volume average particle diameter = 2.0 µm
· SQ3: X-52-1621, manufactured by Shin-Etsu Chemical Co., Ltd., "polysiloxane compound particles having a T unit represented by a formula: [R¹SiO_{3/2}]ₘ (R¹ = a methyl group)"; volume average particle diameter = 5.0 µm
· SQ4: PSS-octakis(dimethylsilyloxy) substituted body, manufactured by Sigma-Aldrich Co., LLC, "polysiloxane compound particles having a T unit represented by a formula: [R¹SiO_{3/2}]ₘ (R¹ = a methyl group)"; volume average particle diameter = 5.0 µm

**[Table 1]**

| | Surface layer | | | | | | | | Evaluation | |
|---|---|---|---|---|---|---|---|---|---|---|
| | Binding material | Polysiloxane compound particles | | | | Film thickness µm | With or without surface layer polishing | Rz µm | Cleaning performance | Crack resistance |
| | Type | Type | Particle diameter µm | Part by mass of siloxane compound particles | Surface exposure rate % | | | | | |
| Example 1 | AcyUre | SQ1 | 0.7 | 100 | 30 | *5* | Y | *0.15* | A (Good) | A (Good) |
| Example 2 | AcyUre | SQ1 | 0.7 | 140 | 45 | 20 | Y | 0.3 | S- (Excellent) | S (Excellent) |
| Example 3 | AcyUre | SQ1 | 0.7 | 200 | 60 | 20 | Y | *0.5* | S (Excellent) | S- (Excellent) |
| Example 4 | AcyUre | SQ1 | 0.7 | 220 | 65 | 20 | Y | *0.5* | S (Excellent) | A (Good) |
| Example 5 | AcyUre | SQ1 | 0.7 | 250 | 72 | 20 | Y | 3.0 | A (Good) | A (Good) |
| Example 6 | AcyUre | SQ1 | 0.7 | 100 | 33 | 30 | Y | 0.08 | A (Good) | A (Good) |
| Example 7 | AcyUre | SQ1 | 0.7 | 140 | 48 | 20 | Y | 0.1 | S- (Excellent) | S (Excellent) |
| Example 8 | AcyUre | SQ1 | 0.7 | 200 | 62 | 10 | Y | 5.1 | B (Fair) | A (Good) |
| Example 9 | AcyUre | SQ1 | 0.7 | 250 | 70 | 10 | Y | 6.0 | B (Fair) | B (Fair) |
| Example 10 | AcyUre | SQ1 | 0.7 | 140 | 45 | 10 | Y | *0.5* | S (Excellent) | A (Good) |
| Example 11 | AcyUre | sQ2 | 2 | 140 | 42 | 10 | Y | 1.8 | A (Good) | A (Good) |
| Example 12 | AcyUre | SQ3 | *5* | 140 | 40 | 10 | Y | *5.0* | B (Fair) | A (Good) |
| Example 13 | AcyUre | SQ1 | 0.7 | 180 | *55* | *15* | Y | 0.2 | S (Excellent) | S (Excellent) |
| Example 14 | AcyUre | SQ4 | *5* | 200 | 40 | 10 | Y | 2.1 | A (Good) | A (Good) |
| Comparative Example 1 | AcyUre | SQ1 | 0.7 | 80 | 19 | 20 | Y | 2.4 | C (Poor) | S (Excellent) |
| Comparative Example 2 | AcyUre | SQ1 | 0.7 | 280 | 80 | 10 | Y | 4.2 | B (Fair) | C (Poor) |
| Comparative Example 3 | AcyUre | SQ2 | 2 | 100 | 28 | 10 | N | 5.0 | C (Poor) | A (Good) |

From the above results, it is found that the electrophotographic member according to the present example has both excellent cleaning performance and crack resistance as compared with the electrophotographic members according to Comparative Examples.

The present exemplary embodiments include the following aspects.
(((1))) An electrophotographic member comprising:
   a surface layer that contains a binding material and polysiloxane compound particles,
   wherein a content of the polysiloxane compound particles in the surface layer is 100 parts by mass or more and 250 parts by mass or less with respect to 100 parts by mass of the binding material, and
   an exposure rate of the polysiloxane compound particles in the surface layer is 30% or more and 75% or less.
(((2))) The electrophotographic member according to (((1))),
   wherein the content of the polysiloxane compound particles is 140 parts by mass or more and 220 parts by mass or less with respect to 100 parts by mass of the binding material, and
   the exposure rate of the polysiloxane compound particles in the surface layer is 45% or more and 65% or less.
(((3))) The electrophotographic member according to (((1))) or (((2))),
   wherein a surface of the surface layer is a polished surface.
(((4))) The electrophotographic member according to (((3))),
   wherein a ten-point average roughness Rz on the surface of the surface layer is 0.1 µm or more and 5.0 µm or less.
(((5))) The electrophotographic member according to any one of (((1))) to (((4))),
   wherein a volume average particle diameter of the polysiloxane compound particles is 3 µm or less.
(((6))) The electrophotographic member according to any one of (((1))) to (((5))),
   wherein the polysiloxane compound particles are polysiloxane compound particles that have a T unit represented by a formula: [R¹SiO_{3/2}]ₘ (in the formula, R¹ represents an organic group, and m represents an integer of 2 or more), in which at least one R¹ among a plurality of R¹'s present in the T unit is a group including at least one of an alkyl group or an aryl group.
(((7))) The electrophotographic member according to (((6))),
   wherein the group including at least one of an alkyl group or an aryl group is a group including an alkyl group.
(((8))) A transfer device comprising:
   a transfer member configured of the electrophotographic member according to any one of (((1))) to (((7))).
(((9))) A charging device comprising, as a charging member:
   a charging member configured of the electrophotographic member according to any one of (((1))) to (((7))).
(((10))) An image forming apparatus comprising:
   an image holder;
   a charging device that charges a surface of the image holder;
   an electrostatic latent image forming device that forms an electrostatic latent image on the charged surface of the image holder;
   a developing device that accommodates a developer containing a toner and develops the electrostatic latent image formed on the surface of the image holder with the developer to form a toner image;
   the transfer device according to (((8))), that transfers the toner image onto a surface of a recording medium; and
   a fixing device that fixes the toner image on the surface of the recording medium.
(((11))) An image forming apparatus comprising:
   an image holder;
   the charging device according to (((9))), that charges a surface of the image holder;
   an electrostatic latent image forming device that forms an electrostatic latent image on the charged surface of the image holder;
   a developing device that accommodates a developer containing a toner and develops the electrostatic latent image formed on the surface of the image holder with the developer to form a toner image;
   a transfer device that transfers the toner image onto a surface of a recording medium; and
   a fixing device that fixes the toner image on the surface of the recording medium.
(((12))) A method of manufacturing an electrophotographic member, comprising:
   a step of forming a polysiloxane compound particle-containing layer that contains a binding material and polysiloxane compound particles; and
   a step of polishing a surface of the polysiloxane compound particle-containing layer to form the polished polysiloxane compound particle-containing layer into a surface layer;
   wherein a content of the polysiloxane compound particles in the surface layer is 100 parts by mass or more and 250 parts by mass or less with respect to 100 parts by mass of the binding material, and
   an exposure rate of the polysiloxane compound particles in the surface layer is 30% or more and 75% or less.

The effects of the above-described aspects are as follows.

According to (((1))), there is provided an electrophotographic member including a surface layer containing a binding material and polysiloxane compound particles, in which cleaning performance and crack resistance are both excellent as compared with a case where a content of the polysiloxane compound particles is less than 100 parts by mass or more than 250 parts by mass with respect to 100 parts by mass of the binding material, or a case where an exposure rate of a siloxane compound in the surface layer is less than 30% or more than 75%.

According to (((2))), there is provided an electrophotographic member in which cleaning performance and crack resistance are both excellent as compared with a case where the content of the polysiloxane compound particles is less than 140 parts by mass or more than 200 parts by mass with respect to 100 parts by mass of the binding material, or a case where the exposure rate of the polysiloxane compound particles in the surface layer is less than 45% or more than 65%.

According to (((3))), there is provided an electrophotographic member in which cleaning performance and crack resistance are both excellent as compared with a case where the surface of the surface layer is a non-polished surface.

According to (((4))), there is provided an electrophotographic member in which cleaning performance and crack resistance are both excellent as compared with a case where the ten-point average roughness Rz on the surface of the surface layer is less than 0.1 µm or more than 5.0 µm.

According to (((5))), there is provided an electrophotographic member in which cleaning performance and crack resistance are both excellent as compared with a case where the volume average particle diameter of the polysiloxane compound particles is more than 3 µm.

According to (((6))), there is provided an electrophotographic member in which cleaning performance and crack resistance are both excellent as compared with a case where the polysiloxane compound particles of the surface layer is dimethyl silicone particles.

According to (((7))), there is provided an electrophotographic member in which cleaning performance and crack resistance are both excellent as compared with a case where the group including at least one of an alkyl group or an aryl group is a group including an aryl group.

According to (((8))) or (((10))), there is provided a transfer device including a transfer member that includes a surface layer containing a binding material and polysiloxane compound particles, in which cleaning performance and crack resistance are both excellent as compared with a case where a content of the polysiloxane compound particles is less than 100 parts by mass or more than 250 parts by mass with respect to 100 parts by mass of the binding material, or a case where an exposure rate of a siloxane compound in the surface layer is less than 30% or more than 75%; or an image forming apparatus including the transfer device.

According to (((9))) or (((11))), there is provided a charging device including a charging member that includes a surface layer containing a binding material and polysiloxane compound particles, in which cleaning performance and crack resistance are both excellent as compared with a case where a content of the polysiloxane compound particles is less than 100 parts by mass or more than 250 parts by mass with respect to 100 parts by mass of the binding material, or a case where an exposure rate of a siloxane compound in the surface layer is less than 30% or more than 75%; or an image forming apparatus including the charging device.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1Y, 1M, 1C, 1K: image forming unit
11: photoreceptor
12: charger
13: laser exposure device
14: developer
15: intermediate transfer belt
16: primary transfer roll
17: photoreceptor cleaner
20: secondary transfer unit
22: secondary transfer roll
23: secondary transfer belt
23A: drive roll
23B: idle roll
25: back roll
26: power supply roll
31: drive roll
32: support roll
33: tension applying roll
34: cleaning back roll
35: intermediate transfer belt cleaner
40: control unit
42: reference sensor
43: image density sensor
50: paper storage portion
51: paper feeding roll
52: transport roll
53: transport guide
55: transport belt
56: fixing inlet guide
60: fixing device
100: image forming apparatus

## Claims

1. An electrophotographic member comprising:
a surface layer that contains a binding material and polysiloxane compound particles,
wherein a content of the polysiloxane compound particles in the surface layer is 100 parts by mass or more and 250 parts by mass or less with respect to 100 parts by mass of the binding material, and
an exposure rate of the polysiloxane compound particles in the surface layer is 30% or more and 75% or less.

2. The electrophotographic member according to claim 1,
wherein the content of the polysiloxane compound particles is 140 parts by mass or more and 220 parts by mass or less with respect to 100 parts by mass of the binding material, and
the exposure rate of the polysiloxane compound particles in the surface layer is 45% or more and 65% or less.

3. The electrophotographic member according to claim 1 or 2,
wherein a surface of the surface layer is a polished surface.

4. The electrophotographic member according to claim 3,
wherein a ten-point average roughness Rz on the surface of the surface layer is 0.1 µm or more and 5.0 µm or less.

5. The electrophotographic member according to any one of claims 1 to 4,
wherein a volume average particle diameter of the polysiloxane compound particles is 3 µm or less.

6. The electrophotographic member according to any one of claims 1 to 5,
wherein the polysiloxane compound particles are polysiloxane compound particles that have a T unit represented by a formula: [R¹SiO_{3/2}]ₘ (in the formula, R¹ represents an organic group, and m represents an integer of 2 or more), in which at least one R¹ among a plurality of R ^{1,} S present in the T unit is a group including at least one of an alkyl group or an aryl group.

7. The electrophotographic member according to claim 6,
wherein the group including at least one of an alkyl group or an aryl group is a group including an alkyl group.

8. A transfer device comprising:
a transfer member configured of the electrophotographic member according to any one of claims 1 to 7.

9. A charging device comprising, as a charging member:
a charging member configured of the electrophotographic member according to any one of claims 1 to 7.

10. An image forming apparatus comprising:
an image holder;
a charging device that charges a surface of the image holder;
an electrostatic latent image forming device that forms an electrostatic latent image on the charged surface of the image holder;
a developing device that accommodates a developer containing a toner and develops the electrostatic latent image formed on the surface of the image holder with the developer to form a toner image;
the transfer device according to claim 8, that transfers the toner image onto a surface of a recording medium; and
a fixing device that fixes the toner image on the surface of the recording medium.

11. An image forming apparatus comprising:
an image holder;
the charging device according to claim 9, that charges a surface of the image holder;
an electrostatic latent image forming device that forms an electrostatic latent image on the charged surface of the image holder;
a developing device that accommodates a developer containing a toner and develops the electrostatic latent image formed on the surface of the image holder with the developer to form a toner image;
a transfer device that transfers the toner image onto a surface of a recording medium; and
a fixing device that fixes the toner image on the surface of the recording medium.

12. A method of manufacturing an electrophotographic member, comprising:
a step of forming a polysiloxane compound particle-containing layer that contains a binding material and polysiloxane compound particles; and
a step of polishing a surface of the polysiloxane compound particle-containing layer to form the polished polysiloxane compound particle-containing layer into a surface layer;
wherein a content of the polysiloxane compound particles in the surface layer is 100 parts by mass or more and 250 parts by mass or less with respect to 100 parts by mass of the binding material, and
an exposure rate of the polysiloxane compound particles in the surface layer is 30% or more and 75% or less.
